# EUROPÄISCHE PATENTSCHRIFT

(11) **EP 0 563 728 B1**
(45) Veröffentlichungstag und Bekanntmachung des Hinweises auf die Patenterteilung: **11.10.1995**
(21) Anmeldenummer: 93104646.0
(22) Anmeldetag: 22.03.1993
(51) Int. Cl.: B60R 22/46

(54) **Gurtstraffer für Fahrzeug-Sicherheitsgurtsysteme**
Belt tensioning device for a vehicle safety seat belt system
Dispositif tendeur pour ceinture de sécurité de véhicules

(30) Priorität: 02.04.1992 DE 4211009
(43) Veröffentlichungstag der Anmeldung: 06.10.1993
(73) Patentinhaber: TRW Occupant Restraint Systems GmbH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- DE-A- 3 044 951
- DE-A- 3 307 093
- DE-A- 3 432 451
- DE-A- 3 629 713
- GB-A- 2 157 152
- US-A- 4 615 540

## Beschreibung

Die Erfindung betrifft einen Gurtstraffer für Fahrzeug-Sicherheitsgurtsysteme, mit einem auf einer Seite des frei verlaufenden Gurtbandes in geringem Abstand von diesem angeordneten Stützteil und einem auf der anderen Seite des Gurtbandes in geringem Abstand von diesem angeordneten Angriffsteil, an dem mittels eines Zugelements ein Linearantrieb angeschlossen ist, der bei Aktivierung das Angriffsteil gegen das Gurtband, dieses gegen das Stützteil und schließlich das Angriffsteil unter Bildung einer zum Gurtbandverlauf parallelen Gurtbandschlaufe an dem Stützteil vorbei bewegt.

Ein derartiger Gurtstraffer kann leicht in vorhandene Sicherheitsgurtsysteme integriert werden, da der Gurtbandverlauf nicht verändert wird und ein herkömmlicher Gurtaufroller mit Blockierautomatik verwendet werden kann. Der Linearantrieb kann durch eine pyrotechnische Kolben/Zylinder-Einheit gebildet sein oder von der Relativbewegung eines Fahrzeugteils (Motor- und Getriebeblock) bei einem Fahrzeugaufprall abgeleitet werden. Bei einem aus der DE-OS 33 07 093 bekannten Gurtstraffer dieser Art wird mittels einer beweglichen, an einem schwenkbaren Winkelhebel gelagerten Rolle eine Gurtbandschlaufe zwischen zwei festen Umlenkrollen gebildet. Der Linearantrieb greift an einem Ausleger des Winkelhebels an.

Die Schwenkbewegung des Winkelhebels erfordert aber einen großen Freiraum, der in vorhandenen Fahrzeugkonstruktionen kaum zur Verfügung steht. In der gattungsbildenden DE-PS 30 44 951 ist vorgeschlagen, das Gurtband durch eine Schlinge am Ende eines Zugseils zu führen und bei Aktivierung des Linearantriebs das Gurtband mittels der Seilschlinge gegen eine Umlenkrolle, an dieser vorbei und unter Bildung einer zum Gurtbandverlauf parallelen Gurtbandschlaufe abwärts in Richtung des Gurtaufrollers zu bewegen. Ein solcher Gurtstraffer benötigt nur minimalen Bauraum; jedoch kann durch die Seilschlaufe das Gurtband beschädigt werden.

Durch die Erfindung wird ein Gurtstraffer zur Verfügung gestellt, der wenig Bauraum für seine Unterbringung im Fahrzeug erfordert und schonend am Gurtband angreift, um dieses nicht zu beschädigen.

Bei dem erfindungsgemäßen Gurtstraffer ist das Angriffsteil zwischen den ersten Enden zweier paralleler Schenkel einer Schwinge gehalten, die im Ruhezustand des Gurtstraffers mit quer zum Gurtband gehaltenen Schenkeln an deren Kanten auf dem Stützteil abgestützt ist, wobei das Zugelement an den zweiten Enden der Schenkel der Schwinge angeschlossen ist. Als Angriffsteil kann eine zwischen den Schenkeln der Schwinge drehbar gelagerte Rolle verwendet werden, durch die das Gurtband nicht beschädigt wird. Bei Aktivierung des Gurtstraffers wird die Schwinge aus ihrem Ruhezustand, in dem sie beispielsweise mittels Scherstiften gehalten wird, gelöst und vollführt nun eine Bewegung, die mit der einer Seilschlinge vergleichbar ist und kaum weniger Bauraum beansprucht. Sie wird zunächst um das ein Widerlager bildende Stützteil verschwenkt, gleitet aber dann entlang seiner Oberfläche in dem Bestreben, ihm auszuweichen, wobei die Schwinge weiter verschwenkt wird. Anschließend wird die Schwinge an dem Stützteil vorbei weiterbewegt, wobei sich die Gurtbandschlaufe bildet. Während der Schwenkbewegung der Schwinge wird das Gurtband durch das Angriffsteil zunächst in Anlage an das Stützteil und dann stetig um dieses herum geführt. Diese Bewegung erfolgt ruckfrei und trägt zur Schonung des Gurtbandes bei.

Vorzugsweise wird der Gurtstraffer auf einem U-förmigen Beschlagteil aufgebaut, zwischen dessen Seitenwänden das Stützteil angeordnet ist. Die Schwinge wird mittels Scherstiften an dem Beschlagteil in ihrer Ruhestellung gehalten. Der Boden des Beschlagteils bildet eine Führungsfläche für die Schwinge, die diese auf ihrer Bewegung an dem Stützteil vorbei auf eine Bahn zwingt, die unmittelbar an dem Stützteil vorbeiführt.

Während das Angriffselement an der Schwinge vorzugsweise als leichtgängig drehbare Rolle ausgebildet ist, wird das Stützteil vorzugsweise durch einen drehfest gehaltenen Zapfen gebildet, der eine gegenüber dem Gurtband reibungsfördernd ausgerüstete Oberfläche aufweist. Übliche Sicherheitsgurtsysteme enthalten einen Gurtaufroller, der mit einer fahrzeug- und gurtbandsensitiven Blockierautomatik ausgestattet ist. Das Gurtband verläuft geradlinig zwischen dem Gurtaufroller und einem Umlenkbeschlag. Der Gurtstraffer wird vorzugsweise an diesem geradlinig zwischen Umlenkbeschlag und Gurtaufroller verlaufenden Gurtabschnitt angeordnet. Wenn nun bei Aktivierung des Gurtstraffers Zug auf diesen Gurtbandabschnitt ausgeübt wird, befindet sich der Gurtaufroller im Blockierzustand. Beim Anwachsen der Zugspannung wird der Gurtbandwickel auf der Gurtspule durch den sogenannten Filmspuleneffekt festgezogen, wobei eine gewisse Gurtbandlänge vom Gurtaufroller abgezogen wird. Um diese Gurtbandlänge vermindert sich der wirksame Hub des Gurtstraffers. Da aber bei der beschriebenen Weiterbildung des Gurtstraffers das Gurtband um den drehfest gehaltenen Zapfen geführt wird, an dessen Oberfläche das Gurtband auf eine hohe Reibung trifft, tritt am Gurtband eine stark verminderte Zugspannung auf, durch die der Filmspuleneffekt weitgehend verhindert wird. Für einen Reibwert µ von 0,4 und einen Umschlingungswinkel α von 180° errechnet sich aufgrund der Beziehung e^{µα} eine Verminderung der Zugspannung um einen Faktor von etwa 3,5.

Weitere Merkmale und Vorteile der Erfindung ergeben sich aus der folgenden Beschreibung und aus der Zeichnung, auf die Bezug genommen wird. In der Zeichnung zeigen:
- Fig. 1: eine teilweise geschnittene, schematische Seitenansicht des in ein bestehendes Sicherheitsgurtsystem integrierten Gurtstraffers;
- Fig. 2: eine Perspektivansicht der in Fig. 1 gezeigten Anordnung;
- Fig. 3: eine Schnittansicht des eigentlichen Gurtstraffers im Ruhezustand;
- Fig. 4: eine der Fig. 3 entsprechende Schnittansicht, die den Zustand kurz nach Aktivierung des Gurtstraffers zeigt;
- Fig. 5: eine den Figuren 1 und 2 entsprechende Ansicht, die den Gurtstraffer im Verlauf der Bildung einer Gurtbandschlaufe zeigt; und
- Fig. 6: eine Explosivansicht des Gurtstraffers.

Bei einem herkömmlichen Sicherheitsgurtsystem ist am B-Pfosten eines Fahrzeugs in der Nähe des Fahrzeugbodens ein Gurtaufroller 10 befestigt. Über dem Gurtaufroller ist etwa in Kopfhöhe des Fahrzeuginsassen ein Umlenkbeschlag 12 am B-Pfosten des Fahrzeugs befestigt. Zwischen Gurtaufroller 10 und Umlenkbeschlag 12 erstreckt sich geradlinig ein Gurtbandabschnitt 14. An diesem Gurtbandabschnitt 14 ist ein allgemein mit 16 bezeichneter Gurtstraffer angeordnet.

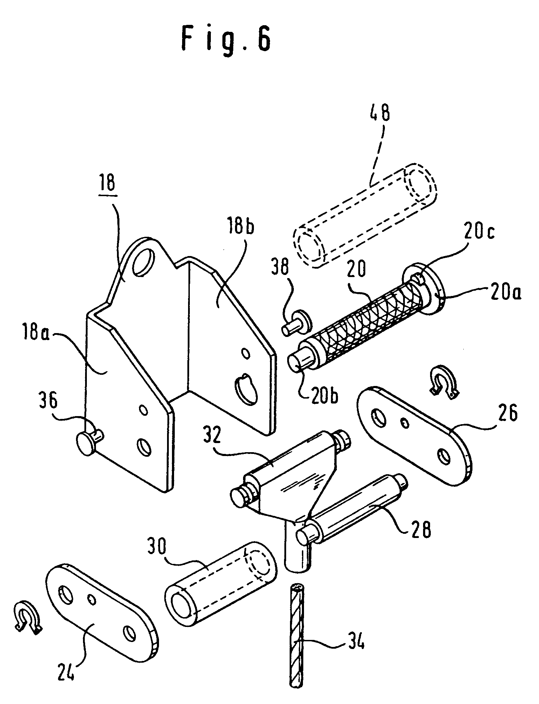

Der Gurtstraffer 16 umfaßt ein U-förmiges Beschlagteil 18, das gleichfalls am B-Pfosten des Fahrzeugs befestigt ist. Die beiden Seitenwände 18a, 18b des Beschlagteils 18 sind durch ein Stützteil 20 miteinander verbunden. Dieses Stützteil 20 ist, wie aus Fig. 6 ersichtlich, aus einem starren Zapfen gebildet, der an seinem einen Ende einen Flansch 20a zur Anlage an der Außenseite der Seitenwand 18b des Beschlagteils 18 aufweist und an seinem gegenüberliegenden, mit 20b bezeichneten Ende an der Seitenwand 18a festgenietet ist. Das Stützteil 18 ist mittels einer Nase 20c, die in eine entsprechende Ausnehmung der Seitenwand 18b des Beschlagteils 18 eingreift, drehfest an diesem gehalten.

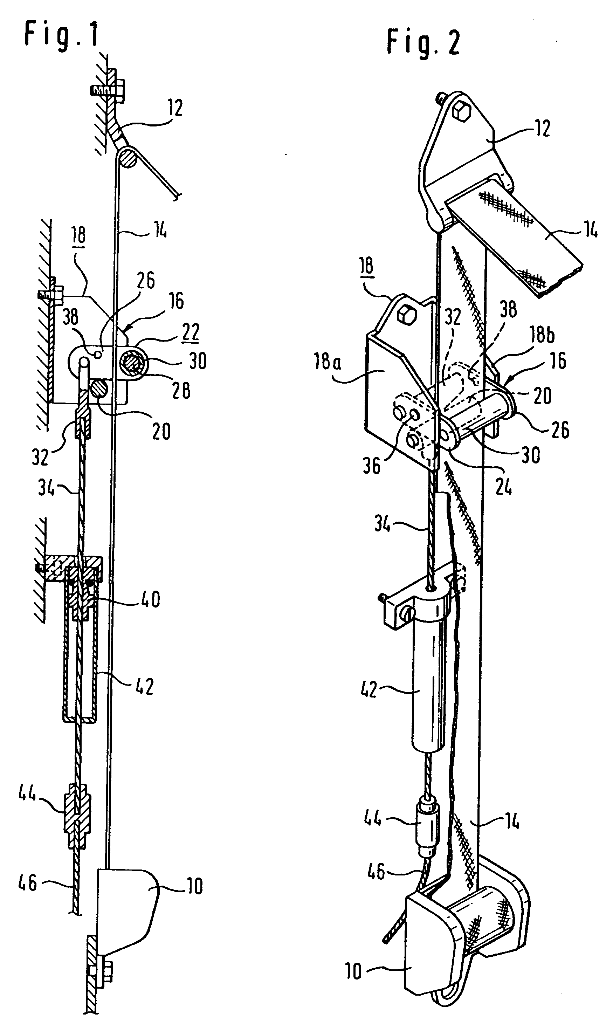

An dem Beschlagteil 18 ist eine Schwinge 22 in einer in den Figuren 1, 2 und 3 gezeigten Ruhestellung gehalten. Diese Schwinge 22 besteht aus zwei parallelen, im Abstand voneinander gehaltenen Schenkeln 24, 26, die an ihren ersten Enden durch eine starre Welle 28 miteinander verbunden sind, auf der eine Rolle 30 leichtgängig drehbar gelagert ist. Zwischen den anderen Enden der Schenkel 24, 26 ist ein T-förmiger Zuganker 32 verschwenkbar gelagert. An diesem Zuganker 32 ist ein Zugseil 34 befestigt. Die Schwinge 22 wird in der in den Figuren 1 bis 3 gezeigten Ruhestellung durch Scherstifte 36, 38 gehalten, die durch miteinander fluchtende Bohrungen in den Seitenwandungen 18a, 18b des Beschlagteils 18 einerseits und den Schenkeln 24, 26 der Schwinge 22 andererseits eingesetzt sind. In dieser Ruhestellung sind die Schenkel 24, 26 der Schwinge 22 quer zur Verlaufsrichtung des Gurtbandabschnitts 14 angeordnet. Die Schwinge 22 stützt sich an den Kanten der Schenkel 24, 26 auf dem Stützteil 20 ab. Dieses Stützteil befindet sich auf der einen Seite des Gurtbandabschnitts 14 in geringem Abstand von diesem, und die Rolle 30 befindet sich in einem Abstand auf der gegenüberliegenden Seite des Gurtbandabschnitts 14. Das Gurtband ist somit unbehindert zwischen Stützteil 20 und Rolle 30 sowie zwischen den Schenkeln 24, 26 der Schwinge 22 durchgeführt.

Das Zugseil 34 führt zu einem Linearantrieb des Gurtstraffers. Dieser Lienarantrieb kann durch eine pyrotechnische Kolben/Zylinder-Einheit gebildet sein oder von einem Fahrzeugteil abgeleitet werden, das bei einem Fahrzeugaufprall eine Relativverschiebung gegenüber dem Fahrzeugaufbau erfährt, insbesondere der Motor- und Getriebeblock. Auf dem Weg des Zugseils 34 befindet sich eine Rücklaufsperre, die aus einem mit dem Zugseil 34 verpreßten Kolben 40 und einem am B-Pfosten des Fahrzeugs befestigten Zylinder 42 besteht, in welchem der Kolben 40 verschiebbar geführt ist. Der Kolben 40 ist in dem Zylinder 42 in Richtung zum Gurtaufroller 10 hin frei verschiebbar, in der entgegengesetzten Richtung jedoch durch Klemmglieder gesperrt; eine Rückbewegung des Kolbens 40 im Zylinder 42 ist - falls beabsichtigt - unter plastischer Verformung des Zylinders 42 möglich, so daß Lastspitzen im Gurtsystem abgebaut werden. Das Ende des Zugseils 34 ist mittels eines Kupplungsteils 44 an einen Seilzug mit Innenseil 46 und nicht gezeigtem Außenmantel angeschlossen, um den Anschluß an ein geeignetes Fahrzeugteil herzustellen, welches bei einem Fahrzeugaufprall relativ zum Fahrzeugaufbau verlagert wird, insbesondere der Motor- und Getriebeblock. Das Kupplungsteil 44 wird bei einem vorbestimmten Wert der Zugspannung getrennt, um zu hohe Zugkräfte von dem Fahrzeuginsassen fernzuhalten und um eine Begrenzung des Gurtstraffer-Hubes zu erreichen.

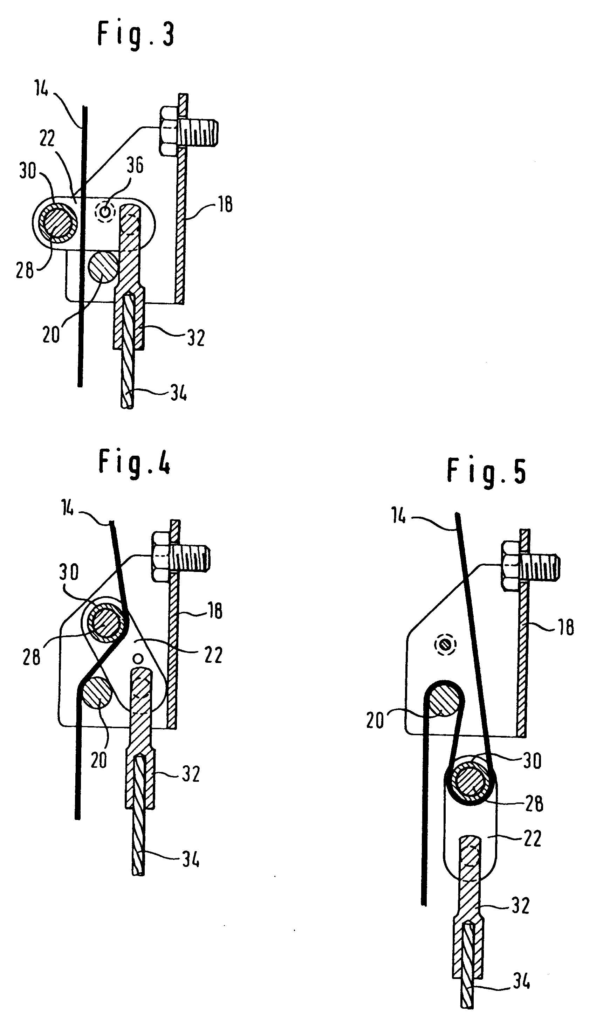

Bei Aktivierung des Gurtstraffers wird über das Zugseil 34 und den Zuganker 32 auf die Schwinge 22 Zug ausgeübt, wodurch zunächst die Scherstifte 36, 38 abgeschert werden. Die sich auf dem Stützteil 20 abstützende Schwinge 22 wird nun zunächst verschwenkt, wobei die Rolle 30 in Richtung des Umlenkbeschlages 12 verlagert wird, bis sie mit dem Gurtbandabschnitt 14 in Berührung kommt. Bei weiterer Verschwenkung der Schwinge 22 gleitet diese über die Oberfläche des Stützteils 20, wobei durch die Rolle 30 das Gurtband zunächst gegen die Oberfläche des Stützteils 20 geführt und dann allmählich um dieses umgelenkt wird. Zugleich gleitet nun die Schwinge 22 über die Oberfläche des Stützteils 20, wie in Fig. 4 gezeigt, wobei die dem Zuganker 32 benachbarten Enden der Schenkel 24, 26 gegen die Bodenwand des Beschlagteils 18 stoßen und durch diese geführt werden. Die Schwinge 22 wird nun zwischen dem Stützteil 20 und dem Boden des Beschlagteils 18 durchgezogen, wobei sich eine Schlaufe in dem Gurtbandabschnitt 14 bildet. Dieser Zustand ist in Fig. 5 dargestellt.

Die Gurtbandschlaufe wird durch weitere Abwärtsbewegung der Schwinge 22 mit dem Zuganker 34 vergrößert, bis der über das Zugseil 34 ausgeübte Zug beendet ist.

Noch bevor eine Aktivierung des Gurtstraffers erfolgt, ist der Gurtaufroller 10 durch seinen fahrzeug- und gurtbandsensitiven Blockiermechanismus gesperrt. Folglich wird bei der Bildung der Gurtbandschlaufe der von dem Umlenkbeschlag 12 zum Fahrzeuginsassen führende Gurtbandabschnitt verkürzt. Um zu verhindern, daß eine ins Gewicht fallende Gurtbandlänge auch vom Gurtaufroller 10 aufgrund des Filmspuleneffektes abgezogen wird, ist das Stützteil 20 an seiner Oberfläche gegenüber dem Gurtband reibungsfördernd ausgerüstet. Besonders wirksam zur Reibungserhöhung ist eine auf dem Stützteil 20 aufgebrachte Hülse 48 aus gummiartigem Material. Diese Hülse 48 muß aber drehfest auf dem Stützteil 20 festgeschlossen sein, damit die gewünschte Umschlingungsreibung zustande kommt, durch die die am Gurtaufroller 10 auftretende Zugspannung im Gurtband auf weniger als ein Drittel des Wertes ohne diese Reibung vermindert werden kann. Zweckmäßig ist eine Ausbildung des Stützteils 20 mit gerändelter Oberfläche, wie in Fig. 6 angedeutet, und die Hülse 48 besteht aus einem Kunststoffmaterial, welches auf dem Stützteil 20 aufgeschrumpft wird, so daß ein Formschluß-Verbund zwischen Hülse 48 und Stützteil 20 eintritt.

## Patentansprüche

1. Gurtstraffer für Fahrzeug-Sicherheitsgurtsysteme, mit einem auf einer Seite des frei verlaufenden Gurtbandes (14) in geringem Abstand von diesem angeordneten Stützteil (20) und einem auf der anderen Seite des Gurtbandes in geringem Abstand von diesem angeordneten Angriffsteil (30), an dem mittels eines Zugelements (32) ein Linearantrieb (46) angeschlossen ist, der bei Aktivierung das Angriffsteil (30) gegen das Gurtband (14), dieses gegen das Stützteil (20) und schließlich das Angriffsteil (30) unter Bildung einer zum Gurtbandverlauf parallelen Gurtbandschlaufe an dem Stützteil (20) vorbei bewegt, dadurch gekennzeichnet, daß das Angriffsteil (30) zwischen den ersten Enden zweier paralleler Schenkel (24, 26) einer Schwinge (22) gehalten ist, die im Ruhezustand des Gurtstraffers (16) mit quer zum Gurtband (14) gehaltenen Schenkeln (24, 26) an deren Kanten auf dem Stützteil (20) abgestützt ist, und daß das Zugelement (32) an den zweiten Enden der Schenkel (24, 26) der Schwinge (22) angeschlossen ist.

2. Gurtstraffer nach Anspruch 1, dadurch gekennzeichnet, daß die Schwinge (22) mittels abscherbarer Halteelemente (36, 38) in ihrer Ruhestellung gehalten ist.

3. Gurtstraffer nach Anspruch 1 oder 2, dadurch gekennzeichnet, daS das Stützteil (20) zwischen den beiden Seitenwänden (18a, 18b) eines U-förmigen Beschlagteils (18) angeordnet ist.

4. Gurtstraffer nach den Ansprüchen 2 und 3, dadurch gekennzeichnet, daß die Halteelemente als Scherstifte (36, 38) ausgebildet sind, welche durch miteinander fluchtende Öffnungen der Seitenwände (18a, 18b) des Beschlagteils (18) und in den Schenkeln (24, 26) der Schwinge (22) eingesetzt sind.

5. Gurtstraffer nach Anspruch 3 oder 4, dadurch gekennzeichnet, daß der Boden des Beschlagteils (18) eine Führungsfläche für die Schwinge (22) bildet.

6. Gurtstraffer nach einem der vorstehenden Ansprüche, dadurch gekennzeichnet, daß das Angriffsteil durch eine Rolle (30) gebildet ist, die auf einer die Schenkel (24, 26) der Schwinge (22) miteinander verbindenden starren Welle (28) drehbar gelagert ist.

7. Gurtstraffer nach einem der vorstehenden Ansprüche, dadurch gekennzeichnet, daß das Zugelement durch einen allgemein T-förmigen Zuganker (32) gebildet ist, der schwenkbeweglich zwischen den zweiten Enden der Schenkel (24, 26) der Schwinge (22) gelagert und an dem ein Zugseil (34) befestigt ist.

8. Gurtstraffer nach einem der vorstehenden Ansprüche, für ein Sicherheitsgurtsystem mit einem eine Blockierautomatik aufweisenden Gurtaufroller (10) und einem Umlenkbeschlag (12), von dem das Gurtband (14) geradlinig zum Gurtaufroller (10) verläuft, wobei der Gurtstraffer (16) an dem Gurtbandabschnitt (14) zwischen Umlenkbeschlag (12) und Gurtaufroller (10) angeordnet ist, dadurch gekennzeichnet, daß das Stützteil (20) durch einen drehfest gehaltenen Zapfen gebildet ist, der eine gegenüber dem Gurtband (14) reibungsfordernd ausgerüstete Oberfläche aufweist.

9. Gurtstraffer nach Anspruch 1, dadurch gekennzeichnet, daß der Zapfen mit einer drehfest aufgebrachten Hülse (48) aus gummiähnlichem Material versehen ist.

## Claims

1. A belt pretensioner for a vehicle safety belt system comprising a support part (20) arranged on one side of the freely extending belt (14) at a small distance from it and an engagement part (30) arranged on the other side of the belt at a small distance from it, with which a linear drive (46) is connected by means of a tractive element (32), which element, on activation, moves the engagement part (30) towards the belt (14), moves the belt towards the support part (20) and ultimately the engagement part parallel to the course of the belt, past the support part (20) with the formation of a loop, characterized in that the engagement part (30) is held between the first ends of two parallel levers (24, 26) of a rocker (22), which, in the rest position of the belt pretensioner (16) with the levers (24, 26) held transversely in relation to the belt (14), is supported via the edges thereof on the support part (20), and in that the tractive element (32) is connected at the second ends of the levers (24, 26) of the rocker (22).

2. The belt pretensioner as claimed in claim 1, characterized in that the rocker (22) is held in its rest position by means of shearable holding elements (36, 38).

3. The belt pretensioner as claimed in claim 1 or 2, characterized in that the support part (20) is arranged between the two side walls (18a, 18b) of a U-like fitting part (18).

4. The belt pretensioner as claimed in claim 2 or 3, characterized in that the holding elements are constituted by shear pins (36, 38) which are fitted through aligned holes in the side walls (18a, 18b) of the fitting part (18) and in the levers (24, 26) of the rocker (22).

5. The belt pretensioner as claimed in claim 3 or 4, characterized in that the bottom of the fitting part (18) constitutes a guide surface for the rocker (22).

6. The belt pretensioner as claimed in any one of the preceding claims, characterized in that the engagement part is constituted by a roll (30) which is mounted on a rigid shaft (28) connecting the levers (24, 26) of the rocker (22).

7. The belt pretensioner as claimed in any one of the preceding claims, characterized in that the tractive element is constituted by a generally T-like terminal (32) which is pivotally mounted between the second ends of the levers (24, 26) of the rocker (22) and on which a pulling cable (34) is secured.

8. The belt pretensioner as claimed in any one of the preceding claims for a safety belt system with a belt retractor (10) having an automatic locking system and with a belt deflection fitting (12), from which the belt (14) runs in a straight line to the belt retractor (10), the belt pretensioner (16) being arranged on the belt portion (14) between the deflection fitting (12) and the belt retractor (10), characterized in that the support part (20) is constituted by a pin non-rotatably mounted and having a surface adapted to enhance friction with the belt (14).

9. The belt pretensioner as claimed in claim 1, characterized in that the pin is provided with a sleeve (48), mounted in such a manner as to prevent relative rotation and manufactured of a rubber-like material.

## Revendications

1. Dispositif tendeur de ceinture pour systèmes de ceinture de sécurité de véhicules, comprenant un élément d'appui (20) disposé d'un côté de la sangle libre (14) de la ceinture, à une faible distance de celle-ci, et un élément d'attaque (30) disposé de l'autre côté de la sangle, à une faible distance de celle-ci, et auquel est raccordé, par l'intermédiaire d'un élément de traction (32), un entraînement linéaire (46) qui, lors de l'actionnement, amène l'élément d'attaque (30) contre la sangle (14), entraînant celle-ci contre l'élément d'appui (20), pour enfin faire passer l'élément d'attaque (30) devant l'élément d'appui (20) en formant une boucle de sangle parallèle au trajet de la sangle, caractérisé en ce que l'élément d'attaque (30) est maintenu entre les premières extrémités de deux branches parallèles (24, 26) d'un bras oscillant (22) qui, à l'état de repos du tendeur (16) de ceinture, est appuyé sur l'élément d'appui (20) par les chants des branches (24, 26) maintenues transversalement à la ceinture (14), et en ce que l'élément de traction (32) est relié aux secondes extrémités des branches (24, 26) du bras oscillant (22).

2. Tendeur de ceinture selon la revendication 1, caractérisé en ce que le bras oscillant (22) est maintenu dans sa position de repos au moyen d'éléments de maintien (36, 38) pouvant être cisaillés.

3. Tendeur de ceinture selon la revendication 1 ou 2, caractérisé en ce que l'élément d'appui (20) est agencé entre les deux parois latérales (18a, 18b) d'une ferrure (18) en forme de U.

4. Tendeur de ceinture selon les revendications 2 et 3, caractérisé en ce que les éléments de maintien sont réalisés sous forme de goupilles de cisaillement (36, 38) insérées à travers des ouvertures alignées ménagées dans les parois latérales (18a, 18b) de la ferrure (18) et dans les branches (24, 26) du bras oscillant (22).

5. Tendeur de ceinture selon la revendication 3 ou 4, caractérisé en ce que le fond de la ferrure (18) forme une surface de guidage du bras oscillant (22).

6. Tendeur de ceinture selon l'une des revendications précédentes, caractérisé en ce que l'élément d'attaque est constitué par un rouleau (30) logé de façon rotative sur un arbre fixe (28) reliant les branches (24, 26) du bras oscillant (22) l'une à l'autre.

7. Tendeur de ceinture selon l'une des revendications précédentes, caractérisé en ce que l'élément de traction est formé par un tirant (32) présentant globalement une forme de T, qui est monté mobile de façon oscillante, entre les secondes extrémités des branches (24, 26) du bras oscillant (22), et sur lequel est fixé un câble de traction (34).

8. Tendeur de ceinture selon l'une des revendications précédentes pour un système de ceinture de sécurité comportant un enrouleur de ceinture (10) présentant un dispositif automatique de blocage et une ferrure de renvoi (12) à partir de laquelle la sangle (14) s'étend en ligne droite jusqu'à l'enrouleur de ceinture (10), le tendeur de ceinture (16) étant disposé sur le brin de la sangle (14) qui s'étend entre la ferrure de renvoi (12) et l'enrouleur de ceinture (10), caractérisé en ce que l'élément d'appui (20) est formé par un pivot maintenu de façon à en interdire la rotation, qui présente une surface apprêtée de manière à favoriser le frottement vis-à-vis de la sangle (14).

9. Tendeur de ceinture selon la revendication 1, caractérisé en ce que le pivot est muni d'un manchon (48) installé de façon à en interdire la rotation, réalisé en un matériau analogue à du caoutchouc.
